# EUROPEAN PATENT APPLICATION

(11) **EP 2 469 499 A1**
(43) Date of publication of application: **27.06.2012**
(21) Application number: 11184840.4
(22) Date of filing: 12.10.2011
(51) Int. Cl.: G09B 5/04, G09B 19/04

(54) **Pre-pronounced spelling teaching device**

(30) Priority: 15.10.2010 US 905289
(71) Applicant: Franklin Electronic Publishers, Incorporated, Burlington, NJ 08016 (US)
(72) Inventor: Lipsky, Barry J., Burlington, NJ 08016 (US); Winsky, Gregory J., Medford, NJ 08055 (US)
(74) Representative: Lane, Cathal Michael

(57) **Abstract**

A hand held electronic device that aids a student to learn spelling provides a spoken audible word through a speaker together with the spelling of the word on a display screen. The spelling and pronunciation is entered, preferably by a parent or known teacher, to provide a comfort level for the student. The learning is tested by one or more game like routines in which the student responds to the spoken word output of the device by entering the spelling through a keyboard.

## Description

### Background

Many books and other devices have been created to aid a person, usually a child, to learn to spell in a predetermined language. In a language learning situation, it is useful to provide the student, particularly if it is a child, with as much comfort as possible in the learning situation so that they will not turn off or turn away from learning.

Accordingly, it is a major purpose of this invention to provide a spelling teaching device which has an enhanced level of comfort for use by a student.

It is a related purpose of this invention to meet the above purpose in a device that is simple and inexpensive so that it will attain widespread use.

It is a further purpose to provide the above in a device that can be independently used by the student so that learning can take place without requiring the presence of a teacher.

### Brief Description

In brief, the basic embodiment of this invention is one which combines various features that provide, in combination, an enhanced comfort level for a student learning how to spell a language.

The device involved is a hand-held electronic reference product having a keyboard and a screen. A memory is adapted to store a set of words including an audio record of each stored word and a spelling record of each stored word.

The device has an-edit mode in which an editor, usually a parent or teacher, uses the keyboard to input a set of spelled words which are stored in the memory. After each word's spelling is input, the teacher switches the device to a state where the teacher uses a microphone to speak the entered spelled word thereby creating an audio record in memory of the pronunciation of each word. The audio record of each word is linked to the spelling record of the word. One advantage of this mode of associating pronunciation with spelling is that the individual speaking into the microphone can be someone with whom the student is familiar such as a parent or a teacher. This familiarity gives a level of comfort to the student and facilitates an understanding of what is being spoken. This process of pronouncing the word and associating that pronunciation with the spelling of the word is repeated for each word on a list or on a series of lists.

A learning mode can then be selected. In this learning mode, actuation of an appropriate key on the keyboard causes display of one or more spelled words on the display screen. Selection of one of the words displayed accesses the audio record of that word and provides pronunciation through a speaker. In this fashion the student has the spelling and associated pronunciation presented.

In one version, a plurality of lists are used ranging from the simplest to more complex and the procedure is repeated for each word in each list after the list involved has been selected by the student.

Each list can be gone over as often as a student wishes until the student is satisfied that he or she has correctly spelled all the words in the list. At that time, the student can go on to an additional list.

The selection of a lists, the repeating of a list, deciding when to go from one list to another are all under control of the student and gives an added sense of comfort to a student.

In a spelling quiz mode, the student presses a key which brings up the pronunciation of a word. The student then has a predetermined time within which to type the spelling of that word on the keyboard. The device has a comparator which compares the typed in spelling against the correct spelling and then provides an indication to the student whether or not the spelling is correct.

Additionally, the device may be equipped with means for adding an audible spelling hint for one or more words on each list. These hints are preferably in the familiar, comforting voice of a parent or teacher and are entered in the edit mode. In the learning mode, the hint can be accessed in the by the student at his or her discretion.

It is believed that this combination of pronunciation by a voice familiar to the student coupled with the student's ability to control much of the operation of that spelling learning device provides an optimum degree of comfort that facilitates the student's learning.

### Brief Description Of The Figures

FIG. 1 is a front view of one embodiment of the device of this invention showing a keyboard and display screen.

FIG. 1A is a back view of the FIG. 1 device showing the speaker.

FIG. 2 is a block diagram showing the main units of this embodiment and their coupling to the central processing unit.

FIG. 3 is a flow chart showing the edit mode used to input the spelling and pronunciation of each word in the set of word lists and to input each hint entered to help a student remember the word.

FIG. 3A is flow chart showing the hint mode that can be accessed by the editor pressing the hint key and that permits the editor to input hints for later accessing by the student.

FIG. 4 is a flow chart of the learning mode in which selection by the student of one of the words on a displayed list causes the audio record of that word to be played through a speaker thus associating pronunciation and spelling for the student.

FIG. 5 is a flow chart showing a quiz mode to test how well a student has learned how to spell a word. FIG. 5 also shows the optional use by the student of hints pre programmed by the parent or teacher.

FIG. 6 is a flow chart showing a word finder mode that can be incorporated in the device of this invention to provide another means to test how well a student has learned the spelling.

### Detailed Description

The Figures are all relate to one embodiment of the invention.

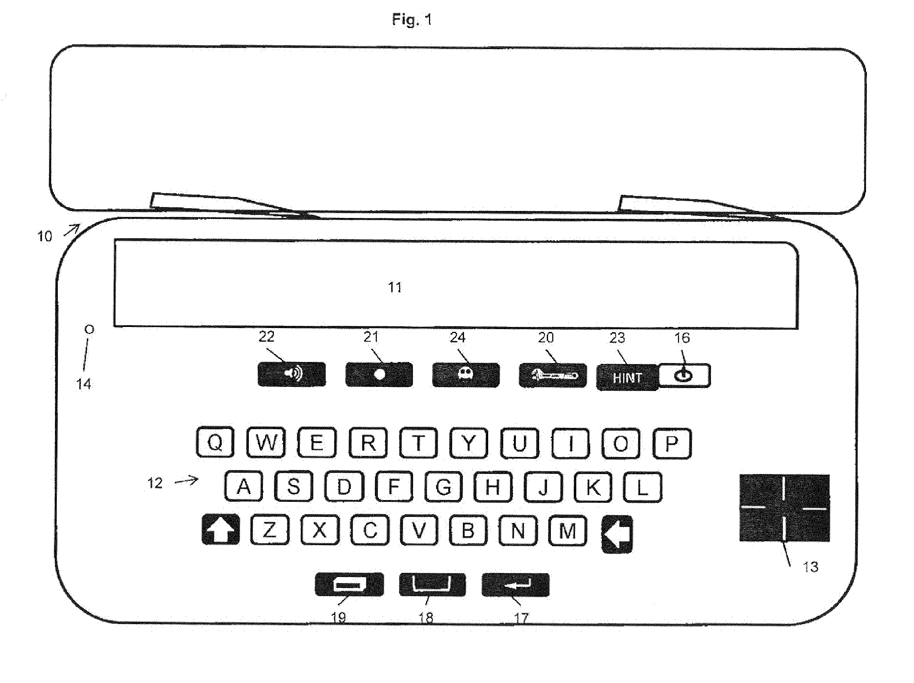

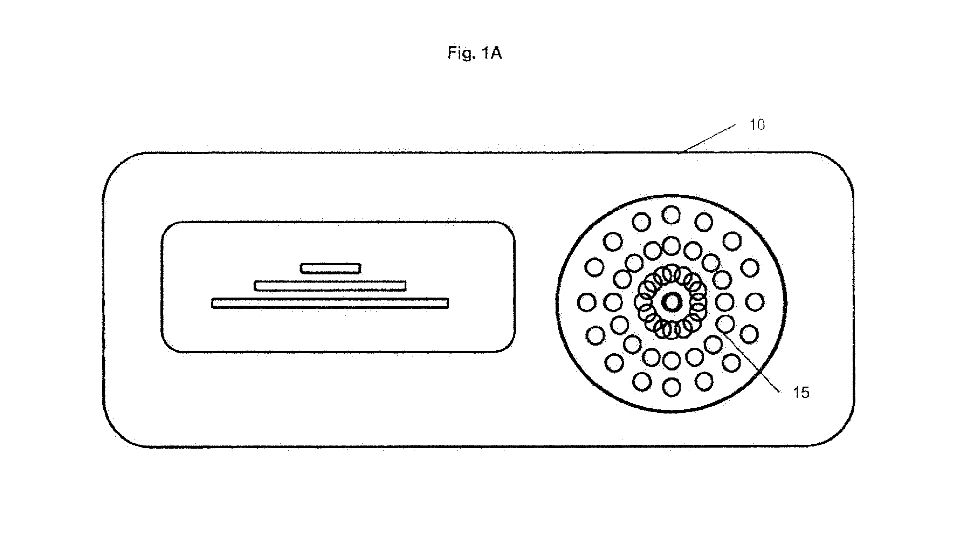

FIG. 1 shows the layout of a portable device 10 exemplifying one embodiment of the invention. The portable device 10 has a display screen 11, a qwerty keyboard 12 and a navigation control key 13. It also has a microphone 14. A speaker 15 is on the back of the device as shown in FIG. IA. In addition there are function keys including an on/off key 16, an enter key 17, a space bar 18, a delete key 19 and a control key 20 that controls volume, contrast and automatic shut off. More pertinent to the special functions of this device are the record key 21, the learning mode key 22, the hint key 23 and, the test mode key 24. These keys are referred to for their function in the discussion that is supported by the flow charts.

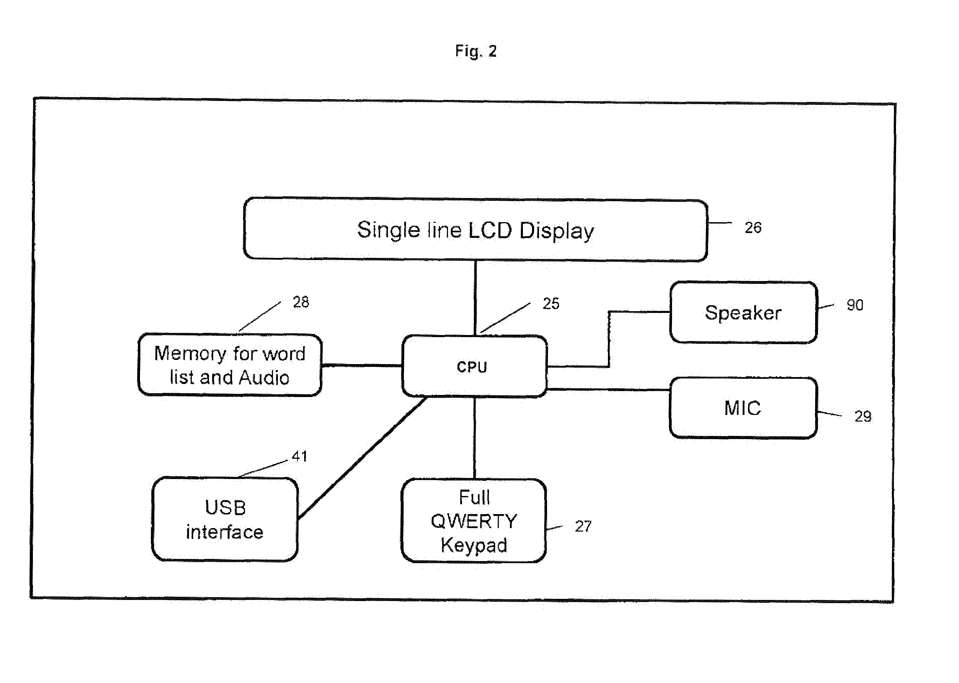

FIG. 2 is a block diagram showing the main components of this embodiment. The central processing unit 25 is the main control unit. This processor 25 can be any processing unit of adequate capacity. It is electrically connected to control the devices shown. A display circuit 26 controls the screen that presents the words whose spelling is to be learned. The keyboard circuit 27 permits data to be input from the keys and, under control of the CPU 25, placed in memory 26.

The memory unit 28 stores keyboard entered words for visual format presentation and also stores the audio pronunciation of words. This audio pronunciation of words is input through the microphone circuit 29. The speaker circuit 90 permits the student to hear the pronunciation of the words. The memory unit 28 may or may not have the spelling and pronunciation stored as records in a database.

A USB port on the side of the device (not shown) may be incorporated to provide an interface with outside devices such as a personal computer. For example, a list from a PC can be synchronized with a list in the device 10.

The processor 25 is programmed with the appropriate software to control and enable each of the circuits. The processor 25 also handles processing of the software to allow functions to be preformed on data held in the database. The functions of the software are disclosed in the flow charts in sufficient detail so that a programmer skilled in the art can create the detailed software from these flow charts.

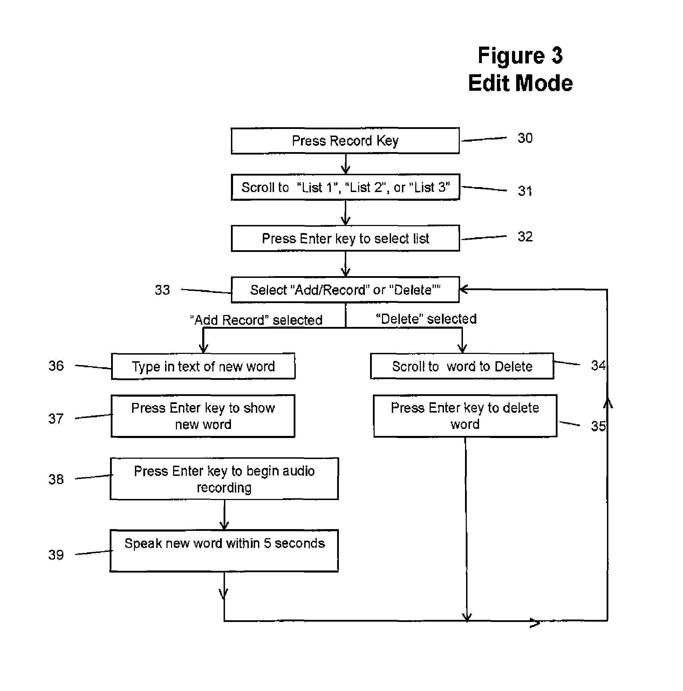

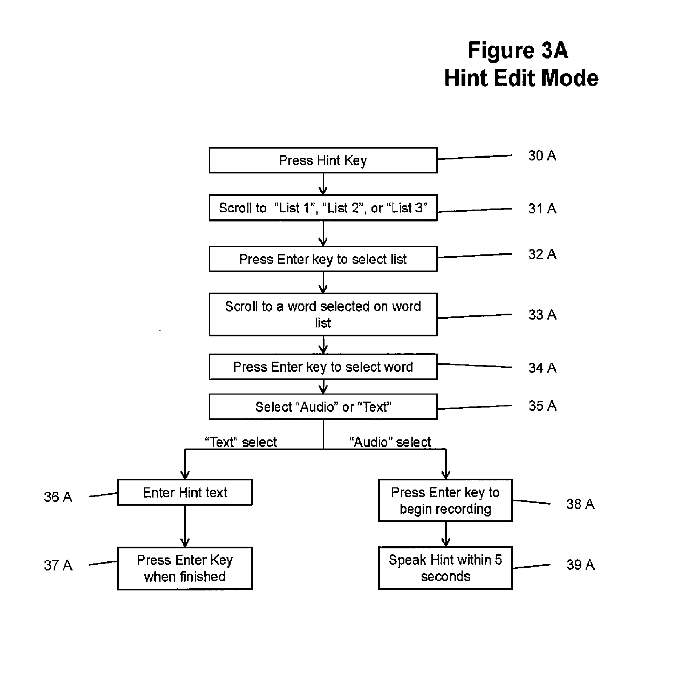

The flow charts of FIGs. 3 through 6 illustrate the steps an editor or a student takes or can take in using the device.

As used herein, the term editor refers to any individual who can input the spelling and pronunciation for the student. Thus the device described herein is adapted to be used by a parent or teacher with whom a student is familiar to provide the comfort level of having a familiar voice, which tends to enhance learning.

FIGs. 3 and 3A set forth the steps taken by the editor, who preferably is a parent or teacher, as the editor enters the spelled and pronounced word into the device's memory and enters hints to help the student.

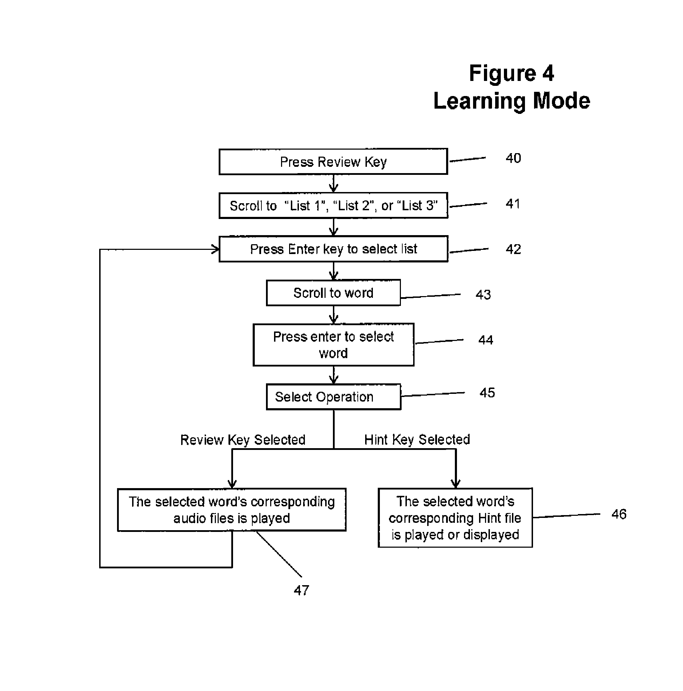

FIG. 4 sets forth the steps taken by the student to learn a word by associating its spelling and its pronunciation. FIG. 4 can also be used by the editor to review the word spelling and pronunciation entered.

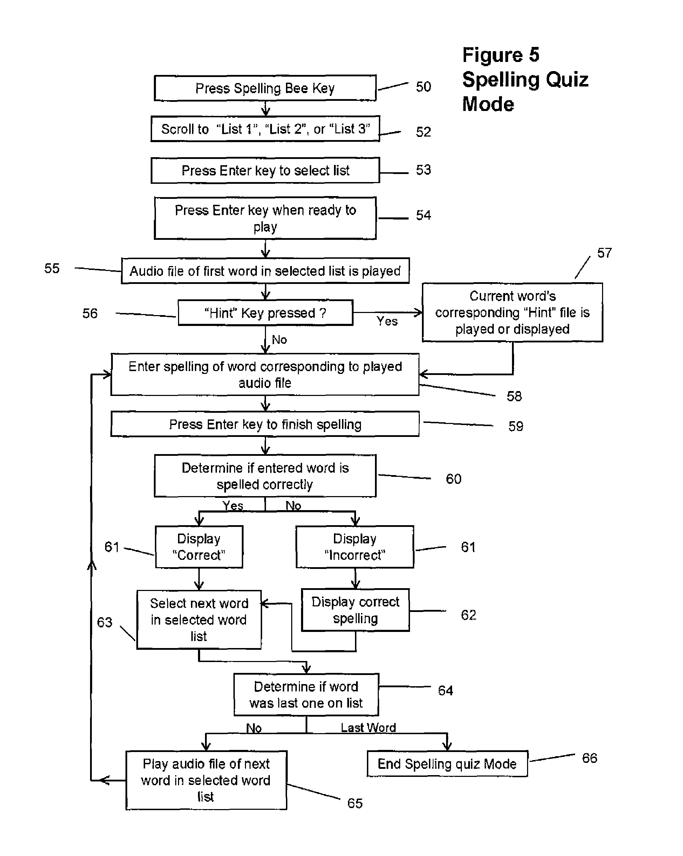

FIG. 5 sets forth steps taken by the student in testing the degree the student has learned to spell a word in response to the pronunciation of the word.

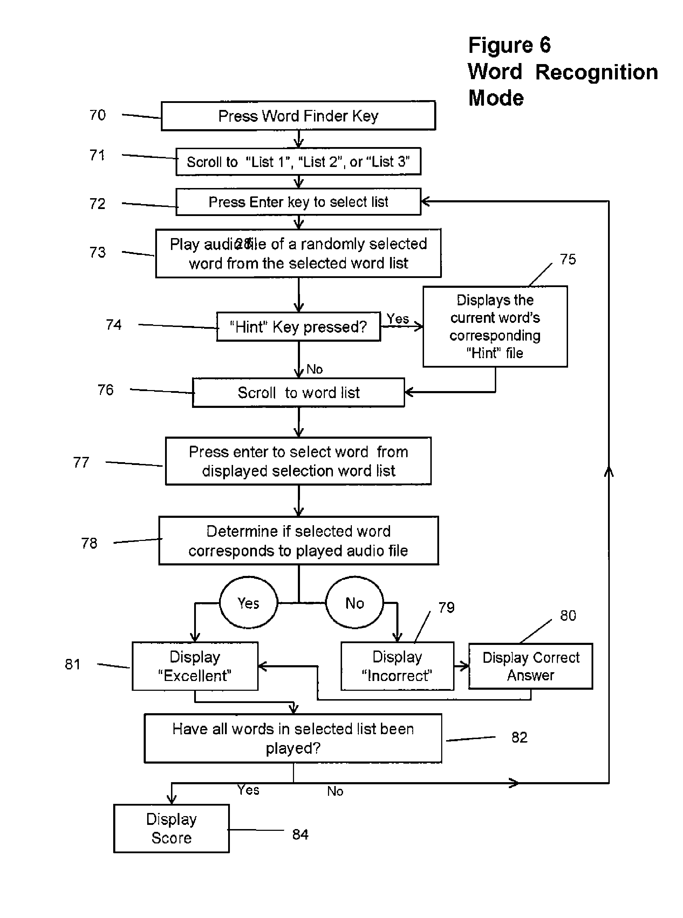

FIG. 6 sets forth the steps taken by a student in testing word visual recognition rather than word spelling. That is, a word is pronounced from memory together with display of a set of words from one of the lists. The student is to select the displayed word that corresponds to the pronounced word. A scoring routine is provided.

### The Edit Mode: either recording a new word or deleting a word.

With reference to FIG. 3, the editor at step 30 presses the record key 21 which causes the display 11 to present the designations: "List 1, List 2, List 3 ", either simultaneously or in sequence. The editor , at step 31, accesses the desired List and presses the enter key 17 (step 32). Then at step 33, the editor responds to the screen display of "Add/Record" and "Delete" by accessing one of those two choices and again pressing the enter key 17.

If the editor has selected "Delete", the words in the List previously selected are available to be scrolled. The editor, at step 34 scrolls to the word to be deleted and, as indicated at step 35 presses the enter key 17 to delete the selected word. The device then presents the choice indicated at step 33. If the editor selects "Add/Record" and then presses the enter key 17, the device is put in a state to accept new words. The editor at step 36 types in a new word through the keyboard 12 and at step 37 presses the enter key 17 to place the word into memory. The enter key 17 is then pressed again at step 38 to enable audio recording. The device provides five seconds at step 39 for the editor to speak the word into the microphone 14. At the end of five seconds, the audio pronunciation of the word is stored in memory and is linked to the corresponding typed version of the immediately preceding typed word.

Each of the terms "scroll" and "select", used at steps 31, 33 and 34 above and elsewhere herein, should be understood to refer to steps in which the device either provided the choices one at a time for selection by the editor or provides the choices simultaneously on the screen 11 requiring the editor to scroll to the item to be selected.

There is a hint function as part of the edit mode. When the editor completes word addition and deletion as shown in FIG. 3, the editor has the option of pressing the hint key 23 in step 30A and then proceeding in steps 31A and 32A to duplicate the steps of 31 and 32. Then at step 33A, the editor scrolls to the word selected for a hint and presses the enter key 17 at step 34A. The terms "audio" and "text" are provided on the screen 11 and at step 35A, the editor selects one of those two options. If the editor selects "text", then at step 36A types in the hint through the keyboard 1w and then presses the enter key (step 37A) to establish the hint in memory associated with the word entered at step 34A. If the editor selects "audio", then at step 38A, presses the enter key 17 and for step 39A speaks the word's pronunciation through the device's microphone. A time limit of, for example 5 seconds, is permitted for the speaking of the hint. This hint edit mode can be repeated at the option of the editor for whatever words on whichever lists are selected by the editor.

One example of the hint that might be used for a particular student might be the following. The word the student is to spell is "gate". The hint the editor might enter is "remember your auntie in Minneapolis". In this example, this hint makes sense where the aunt's name is Kate.

### The Learning Mode.

As shown in FIG.4, at step 40, the student presses the learning mode key 22 and the device presents on its display screen 11 the legends "List 1", "List 2" and "List 3". These designators are presented to the student either sequentially or all together. Thus either the student or the machine scrolls to the desired List at step 41 and, at step 42, presses the enter key 17 to select the desired List. Then, at step 43, the student scrolls through the list sequentially to locate a desired word. Normally the student will start at the top of the selected List. At the desired word, the student presses the enter key 17 at step 44, to select the scrolled word which is displayed on the screen 11. The student then, at step 46, presses the learning mode key 22 or the hint key 23 If the learning mode key 22 is pressed, the device plays the audible word through its speaker 15. Thus at step 47 the student hears the word pronounced at the same time as the student observes the spelling of the word on the display screen 11.

If at step 46, the hint key 23 is pressed, then at step 48, the previously recorded hint is played through the speaker or presented on the screen. For example, if the word displayed is "gate", pressing the hint button could provide the hint "Remember your auntie in Minneapolis"; her name being Kate.

This learning mode can also be used by the editor to check on the inputs from the edit mode. The editor can then revert to the edit mode to make corrections by deleting a record or adding a corrected record.

### The Spelling Quiz Mode.

FIG. 5 illustrates one game like routine to check how well a student has learned how to spell the words presented by this device.

With reference to FIG. 5, at step 50 the student presses the test mode key 24 which brings up the same List choice as provided in the FIG. 4 learning mode. At step 52, the student accesses the desired List and at step 53 presses the enter key 17 to enable the selected List. When ready to play (actually to be tested) the student, at step 54, presses the enter key 17 again. The student then listens to the pronunciation of the first word on the selected List, at step 55.

The student might then, at step 56, press the Hint key 23 to obtain oral or written information, at step 57, to aid the student in spelling the word. If the Hint key is not pressed or if the hint has been presented, the student then, at step 58, enters, on the keyboard 12, the student's understanding of how to spell the word that had been pronounced at step 55. When finished spelling, the student again presses the enter key 17 (step 59). The device determines if the student entered word is spelled correctly (step 60) and at step 61 displays either "Correct" or "Incorrect". The correct spelling is displayed at step 62 if the student had entered the incorrect spelling. At step 63 the next word on the List is selected by the program and at step 64 this next word is determined to be or to not be the last word on the list. If it is not the last word, the audio file pronounce the next word at step 65 and thereafter the sequence of steps from step 58 on can be repeated until the List is exhausted. When the list is exhausted, such a determination is made at step 64 and then the mode is stopped at step 66.

### Word Recognition Mode.

FIG. 6 is a second game like routine to test how well a student has done on the recognition of how a pronounced word is spelled. The word finder mode provides a score at the end.

The first few steps 70, 71 and 72 of this mode are essentially the same as in the FIG. 5 mode. But at step 73, the audio file of a randomly selected word from the selected word List is played rather than having the words on the List played in order.

Steps 74 and 75 correspond to steps 56 and 57 in the FIG. 5 mode. At step 76, the words of a List selected is provided to the student so that the student can scroll through that List to, at step 77, select a word that is displayed on the word List and press enter to select that word. The selected word from step 77 is compared with the audio file that was played to determine if the selected word corresponds appropriately. This occurs at step 78.

If the selected word does not corresponds then at step 79 the indication "Incorrect" is provided on the display screen and at step 80 the correct answer is displayed on the screen. If the selected word does correspond to the audio file, then the screen displays "Excellent". At step 82, determination is made as to whether all of the words in the selected List have been played. If not, then the routine beginning at step 72 is repeated until all of the words have been played. When all of the words have been played, a score is calculated and at step 84 that score is displayed.

One advantage of the design shown is that it can be used to teach spelling in any language that uses the standard QWERTY keyboard. The inputs by the editor of both spelling and pronunciation of a word are determined by the editor and not by the device itself. Thus, the device can be used in any language that uses the Latin alphabet in which special pronunciation marks can be ignored.

While the foregoing description and drawings represent the presently preferred embodiments of the invention, it should be understood that those skilled in the art will be able to make changes and modifications to those embodiments without departing from the teachings of the invention and the scope of the claims.

## Claims

1. A spelling teaching device comprising:
a processor and a memory adapted to store an audio record and a spelling record of each of a set of stored words, said device having a keyboard, a microphone, a speaker and a display screen,
said device having an edit mode, a spelling learning mode and a test mode,
in said edit mode, said device (a) responsive to actuation of said keyboard to create a stored spelling record in said memory of whatever spelled words are entered through said keyboard, (b) responsive to audio input at said microphone to create a stored audio record in said memory of audio words entered through said microphone and (c) adapted to cause said memory to associate sequentially entered ones of said spelled and audio words,
in said spelling learning mode, said device (a) adapted to provide on said display a set of words from said stored spelling record and (b) adapted to be responsive to the selection of a word on said display to provide from said audio record the associated pronunciation of the selected word through said speaker,
in said test mode, said device (a) adapted to provide the audio pronunciation of each of said stored words to said speaker, (b) adapted to respond to a spelling input from said keyboard to compare the input spelled word against the spelling record of the immediately preceding pronounced word to provide an indication of correct or incorrect spelling and (c) adapted to display said indication of correct or incorrect spelling on said display screen.

2. The spelling teaching device of claim 1 further comprising:
said device having a hint mode accessible by a predetermined key on said keyboard,
in said hint mode, said device providing predetermined hint information relevant to the word selected from the word list in said learning mode and relevant to the word spelled in said quiz mode.

3. The spelling teaching device of claim 2 wherein: in said edit mode, said device is responsive to actuation of a predetermined hint key to respond to input hints by creating a stored record of said predetermined hints, each of said hints associated with a particular one of said words.

4. The spelling teaching device of claim 1 wherein said set of stored words is arranged in separate lists to permit user selection of the list to be processed in said learning mode.

5. The spelling teaching device of claim 6 wherein said memory provides a score at the end of the processing of each of said lists during said quiz mode.

6. The spelling teaching device of claim 4 further comprising: a navigation key to permit selection among said lists.

7. The spelling teaching device of claim 1 having a time limit on said spelling input in said quiz mode.

8. A spelling teaching device comprising:
a processor and a memory adapted to store an audio record and a spelling record of each of a set of stored words, said device having a keyboard, a microphone, a speaker and a display screen, said device having an edit mode and a quiz mode,
in said edit mode, said device (a) responsive to actuation of said keyboard to create a stored spelling record in said memory of whatever spelled words are entered through said keyboard, (b) responsive to audio input at said microphone to create a stored audio record in said memory of audio words entered through said microphone that represent the pronunciation of the stored spelling record, (c) adapted to cause said memory to associate sequentially entered ones of said audio words and said spelled words, and (d) responsive to audio input at said microphone to create a stored audio record in said memory hints input through said microphone that represent a hint to the proper identification of said stored spelling record,
in said learning mode, said device (a) adapted to provide on said display a set of words from said stored spelling record, (b) adapted to be responsive to the selection of word on said display to provide from said audio record the associated pronunciation of the selected word through said speaker, and (c) adapted to be responsive to the selection of the word on said display to provide from said audio record the associated audio hint through said speaker,
in said quiz mode, said device (a) adapted to provide the audio pronunciation of each of said stored words to said speaker, (b) adapted to provide an audio hint of each such stored words to said speaker, (c) adapted to respond to a spelling input from said keyboard to compare the input spelled word against the spelling record of the immediately preceding pronounced word to provide an indication of correct or incorrect spelling and (d) adapted to display said indication of correct or incorrect spelling on said display screen.

9. The spelling teaching device of claim 8 further comprising:
said device having a hint mode accessible by a predetermined key on said keyboard,
in said hint mode, said device providing predetermined hint information relevant to the word selected from the word list in said learning mode and relevant to the word spelled in said quiz mode.

10. The method of learning spelling employing a device having a processor and a memory as well as a keyboard, a microphone, a speaker and a display screen, comprising the steps of:
in an edit mode (a) entering the spelling of each word through the keyboard, (b) entering an audio pronunciation of each word through the microphone, and (c) associating each audio record of the word with the spelling record of the word to provide a set of words having associated spelling and pronunciation,
in a learning mode (a) providing a set of words on the display from said spelling record (b) selecting one of said displayed words and (c) from said audio record providing the associated audio pronunciation of the selected word through the speaker,
in a quiz mode (a) providing the audio pronunciation of a word from said audio record through the speaker (b) through the keyboard entering a user determined spelling of the previously pronounced word (c) comparing the associated spelling record to provide an indication of correct or incorrect spelling and (d) displaying said indication on said display screen.
